(19) Europäisches Patentamt

European Patent Office

Office européen des brevets

(11) **EP 1 614 709 A1**

(12) **EUROPEAN PATENT APPLICATION**

(43) Date of publication:
**11.01.2006 Bulletin 2006/02**

(51) Int Cl.:
*C08J 7/12* (2006.01)

(21) Application number: **04253705.0**

(22) Date of filing: **21.06.2004**

| | |
|---|---|
| (84) Designated Contracting States:<br>**AT BE BG CH CY CZ DE DK EE ES FI FR GB GR HU IE IT LI LU MC NL PL PT RO SE SI SK TR**<br>Designated Extension States:<br>**AL HR LT LV MK**<br><br>(71) Applicant: **AIR PRODUCTS AND CHEMICALS, INC.**<br>**Allentown, PA 18195-1501 (US)** | (72) Inventor: **The designation of the inventor has not yet been filed**<br><br>(74) Representative: **Burford, Anthony Frederick**<br>**Beck Greener**<br>**Fulwood House**<br>**12 Fulwood Place**<br>**London WC1V 6HR (GB)** |

(54) **Process for reducing the permeability of plastics materials**

(57) The permeability of a plastics material is reduced by surface-fluorinating at least a portion of the surface of a plastics material to produce a surface-fluorinated plastics material and then exposing said surface-fluorinated plastics material or a surface-fluorinated plastics material derived therefrom to a fluid comprising at least one stabilizer. Permeability of the plastics material to organic solvent is thereby reduced.

Example 1
Normalised Specific Weight-Loss

FIGURE 6

**EP 1 614 709 A1**

**Description**

The present invention relates to a process for reducing the permeability of plastics materials, particularly for reducing the permeability of polymer membranes to organic solvents such as vehicle fuel. The invention has particular application in the treatment of polymer membranes in the form of plastics containers.

In recent years, industrialised nations have taken steps to lower emissions originating from automotive sources in order to improve air quality, in particular in urban areas. As a result, typical hydrocarbon based vehicle fuels have been supplemented with oxygenated components such as ethers and alcohols, e.g. methanol. The combination of the introduction of these new "clean" fuels (containing hydrophobic and hydrophilic components) on to the market and the high legislative standards for the emission of volatile organic compounds ("VOCs") represents a significant challenge to the established barrier fluorination techniques extensively used in the automotive industry. The new fuels and emission standards require techniques for the production of fluorinated surface barrier layers which allow only very low permeation of such fuels.

The permeation of liquids through polymer membranes is often described as a staged process involving wetting of the upstream substrate surface, "dissolution" of the liquid into the polymer, diffusion of the solute through the polymer and desorption of the solute on the downstream side of the membrane. Therefore, decreasing the wettability of a polymer membrane surface usually decreases the permeability of the membrane to liquids. One method of decreasing the wettability of a polymer membrane is by surface fluorination.

Fluorine has been used to reduce the reactivity of rubber to reactive chemicals. For example, US-A-2129289 (Söll; published 1938) discloses a process for fluorinating rubber, synthetic rubber-like masses and substitutes for rubber such that they are resistant to the action of fluorine. The rubber is treated with fluorine diluted by a factor of 1:1 to 1:10 in an indifferent gas such as air, nitrogen or carbon dioxide. The surface of the fluorinated rubber contains between about 1 to about 10% fluorine which renders the rubber resistant to the action of fluorine.

On an industrial scale, surface fluorination is usually carried out either "in-line" or "off-line".

With the "in-line" process, fluorination is an intrinsic part of a higher-level production process. The treatment is usually a high-pressure, high temperature process that is carried out while the plastic article is being formed within the mould. Therefore, the time available for fluorine treatment is usually short and ranges from about 1 to no more than about a few minutes.

In the "off-line" process, fluorination is usually applied to the finished plastics article and may be carried out temporally and spatially distant from the actual production of the plastic article. "Off-line" fluorine treatment processes are typically low-pressure processes performed at slightly elevated temperatures. Treatment time can take up to about two hours.

In the surface fluorination process, the polymeric substrate is usually exposed at ambient or elevated temperatures to fluorine or a fluorine-containing gas mixture. During this treatment, hydrogen bonded within the polymer is progressively replaced by fluorine. Gaseous hydrogen fluoride is a volatile by-product of this replacement process.

The fluorination of a polyolefin results in the formation of a fluorinated surface layer with selective repellent properties resulting, in itself, in significantly reduced rates of gas, vapour and solvent permeation. For example, US-A-2811468 (Joffre *et al*; published 1957) discloses treating polyethylene bottles with a stream of fluorine gas at room temperature. Test results showed that the treated bottles were less permeable to test liquids such as allyl caproate, perfume and aftershave than untreated bottles.

It is known that the presence of oxygen during fluorination can adversely affect the barrier performance of plastics articles. Various processes have been developed to address this problem but these processes usually seek to solve this problem by carefully controlling of the level of oxygen as a contaminant during fluorination. For example, US-A-4491653 (McGinniss *et al*; published 1985) discloses a process for fluorinating the surface of a solid polymer using fluorine in oxygen-free nitrogen. US-A-5401451 (Meixner *et al*; published 1995) discloses a multi-step fluorination process for blow moulding thermoplastic containers in an essentially oxygen-free environment.

The permeation barrier properties of surface fluorination can be enhanced by the addition of components to the fluorination fluid medium. For example, US-A-3862284 (Dixon *et al*; published 1975) discloses a process for blow moulding thermoplastic articles using a blowing gas containing about 0.1 to about 20% by volume fluorine in an inert gas such as nitrogen, argon or helium. It is disclosed that the addition of about 0.5 to about 20% by volume of sulphur dioxide to the fluorine-containing blowing gas improves the solvent barrier properties of the resultant blow moulded container and that the addition of about 0.5 to about 20% by volume of carbon monoxide, about 0.5 to about 50% by volume of carbon dioxide or mixtures of both improves the oil barrier properties of the container. It is also disclosed that the addition of about 0.05 to about 25% by volume of oxygen increases not only the dyeability but also the oil barrier properties of the container.

It is also known to improve the barrier properties of thermoplastic substrates by fluorinating the surface of the substrate and then either coating the fluorinated surface with a barrier coating such as polyvinylidene chlorides, ethylene vinyl alcohols, epoxies, polyurethanes, acrylics, polyvinyl chloride, ureaformaldehyde, silicones and fluorocarbons [see US-A-4764405 (Bauman *et al*; published 1988)] or hydroxylating the fluorinated surface using hydroxide solutions of sodium, calcium or ammonium and then refluorinating the surface [see US-A-3758450 (Margrave *et al*; published 1973)].

Researchers have stressed in particular the importance of surface wetting for the permeation of liquids and vapours through fluorinated barrier layers. Hayes (J. Fluorine Chem. 8(1), 69 (1976)) studied the permeation of a broad range of pure solvents through polyethylene treated either with virtually oxygen-free or oxygen containing fluorine/inert gas blends. It was found that surfaces treated with virtually oxygen-free fluorine blends are almost always not wetted by hydrophobic media. Surface fluorination in the presence of oxygen provided surfaces with some repellence towards hydrophobic solvents. These surfaces were however, readily wetted by hydrogen bonding solvents. Under the conditions chosen, surfaces treated without the addition of oxygen were more easily wetted by strongly hydrogen bonding solvents like water.

Du Toit *et al* (J. Fluorine Chemistry 74, 43 (1995)) treated polyethylene samples with both technically oxygen-free and oxygen-containing fluorine/nitrogen blends in a dynamic flow system. The results indicated that polyethylene surfaces were more easily wetted by hydrogen bonding solvents if the surfaces were submitted to a very short treatment with standard fluorine/inert gas blends.

Hobbs *et al* (J. Fluorine Chemistry 104, 87 (2000)) studied the permeation of toluene-methanol mixtures through the walls of polyethylene container surfaces treated with technical fluorine/nitrogen blends and those with an oxygen admixture. In particular with containers submitted to the latter treatment, the authors observed "assisted permeation". The presence of hydrophilic methanol increased notably the permeation of toluene thorough the oxyfluorinated container walls.

Studies on the oxidative degradation of polyolefins have demonstrated that polymer degradation results in distinct fragmentation and functionalisation of the polymer, including the formation of oxygen-containing functional groups such as hydroxyl, carbonyl and carboxyl groups (Gugumus, Polym. Deg. Stab. 66,161 (1999)). Hydroxyl, carbonyl and carboxyl groups are efficient hydrogen-bond acceptors and thus these groups are likely to increase the hydrophilic wettability of the polymer. Further surface fluorination studies indicate that the presence of oxygen during the fluorination process can enable formation of oxygen-containing functional groups, which causes the polymer to be more easily wetted by hydrophilic solvents (Adcock *et al*; J. Am. Chem. Soc 100,1948 (1978), Lagow *et al*; Progr. Inorg. Chem 26, 161 (1979); see also US-A-4020223 and US-A-4764405).

Bohland *et al* (Trans. Faraday Soc. 42, 244 (1946)) studied the oxidation of olefins and rubbers and revealed the prominent role of peroxide radicals as key intermediates in the oxidation process. In addition, other studies have also confirmed the key role of peroxide radicals in the oxidative degradation of polymers.

Stabilisers have been developed to inhibit the oxidative processes that affect the integrity of polymers. These stabilisers (often referred to as "antioxidants"), present as a component of the polymer matrix itself, directly interfere with the key steps of a degradation process either by inhibiting radical chain processes in an early phase of the process or by scavenging peroxide radicals, which are the key drivers of the degradation process.

Such stabilizers are usually complex molecules of high molecular weight, low volatility and low mobility within the polymer matrix. Examples of such existing stabilisers include octadecyl 3,5-di-(tert)-butyl-4-hydroxyhydrocinnamate ($C_{35}H_{62}O_3$, CAS No. 2082-79-3, MW 531, mp 55°C), poly(1-(2-hydroxyethyl)-2,2,6,6-tetramethyl-4-hydroxy-piperindinyl succinate) (CAS No. 65447-770, MW > 2500, mp 55-70°C) and tris-(2,4)-di-(tert-butylphenyl)-phosphit ($C_{42}H_{63}O_3P$, CAS No. 31570-04-4, MW 647, mp 96-97°C).

Such stabilisers are, in particular, intended to thwart oxidative processes that occur during the high temperature steps in polymer processing or while the polymer is processed tribologically. In a similar manner, light-induced oxidation can be efficiently inhibited. However, despite the various possibilities that may start the various oxidation processes, the overall oxidative stress that polymers are exposed to under normal circumstances remains low and can be controlled efficiently by a sufficiently high concentration of these stabilizers.

In contrast, the oxidative stress that a polymer is exposed to during surface fluorination is high in comparison. Fluorination causes the formation of radical species throughout the surface layers of the polymer. Measurements have shown that freshly fluorinated polymer surfaces exhibit persistent, post-treatment reactivity (Kharitonov *et al*; Proceedings, Fluorine In Coatings V, Florida 2003). The residual reactivity is believed to be caused by these non-terminated reactive species remaining from the fluorination process. The reactive species are available for subsequent reaction with oxygen upon exposure of the fluorinated surface to ambient air. The result is again the formation of functional groups which facilitate wetting of the polymer surface by hydrogen bonding solvents, thereby facilitating permeation of solvent through the polymer.

The existing strategy to stabilize polymers by incorporating stabilizers within the polymer matrix is not adequate to mitigate the undesired adverse effects provoked by oxidation reactions accompanying surface fluorination. Overall, surface fluorination is a very extensive reaction, which seizes the polymer as a whole. Not only the base polymer itself, but also all the additional components within a polymer, participate in the fluorination reaction. Stabilizers which protect the polymer against oxidation under normal circumstances take part in the fluorination reaction and become converted into inactive fluorinated derivatives. The incompatibility of the stabilizers with the fluorination reaction facilitates progression of oxidation processes which occur during fluorination and enables freshly fluorinated plastic surfaces to remain very sensitive with regard to oxidative degradation.

It is an objective of the present invention to reduce the permeability (thereby improving the barrier performance) of surface fluorinated plastics materials, in particular to organic solvents such as vehicle fuel.

It is another objective of preferred embodiments of the present invention to reduce the wettability of surface fluorinated plastics material to organic solvents, in particular to solvents such as vehicle fuel.

It is a further objection of preferred embodiments to reduce the extent to which fluorinated barrier layer performance deteriorates due to oxidative degradation.

It is also an objective of preferred embodiments of the present invention to reduce the requirements and associated costs for monitoring and controlling the level of oxygen and moisture contaminants in gases and equipment used in surface fluorination processes.

The Inventors have discovered that certain liquid and gaseous compounds comply with these objectives and promote a reduction in the undesired detrimental effects caused by the reaction of oxygen or oxygenating compounds, present during surface fluorination of plastics materials, with the fluorinated surface upon exposure of the surface to ambient air.

In accordance with the first aspect of the present invention, there is provided a process for reducing the permeability of a plastics material to organic solvent comprising:

surface-fluorinating at least a portion of the surface of a plastics material to produce a surface-fluorinated plastics material; and
exposing said surface-fluorinated plastics material or a surface-fluorinated plastics material derived therefrom to a fluid comprising at least one stabilizer.

Without wishing to be bound by any particular theory, the Inventors believe that fluorination of the surface of a plastics material produces polymer-bonded carbon radicals. These radicals react readily with an oxygen source such as air or an alcohol producing oxide radicals, for example, peroxide and alkoxide radicals. The use of at least one stabilizer may deactivate polymer-bonded carbon radicals or scavenge, decompose or derivatize polymer-bonded peroxide and alkoxide radicals thereby reducing the level of oxidative degradation of the surface fluorinated polymer material, reducing wettability of the fluorinated surface, particularly to organic solvents and improving the barrier properties of the polymer.

The term "permeability" is intended to include gas permeability, vapour permeability and liquid permeability. The invention has particular application in reducing the permeability of liquids, in particular organic solvents such as vehicle fuel, through plastics membranes.

The stabilisers preferably quench radical species located at least on the surface of said surface-fluorinated plastics material or said surface-fluorinated plastics material derived therefrom thereby reducing or eliminating unwanted reactions of said material.

The stabilizers are preferably simple molecules having low molecular weight, e.g. no more than about 180. The stabilizers may have a molecular weight of no more than about 150 or even no more than about 110. The stabilizers preferably have a boiling point at atmospheric pressure (about 0.1 MPa or about 1 atm.) of no more than about 150°C , or even no more than about 100°C and are, preferably, gases at room temperature and pressure .

Existing stabilisers are bound within the polymer matrix and, thus, have essentially no mobility. Therefore, they are only capable of preventing oxidative reactions that occur within range of the position of the stabiliser bound within the matrix. The stabilisers of the present invention, however, are not bound within the polymer matrix. In contrast, the surface of the polymer material is exposed to a fluid comprising at least one stabiliser. The stabilisers of the present invention are, thus, more mobile than existing stabilisers bound within the polymer matrix. Therefore, the stabilisers preferably have "high mobility" when compared to existing stabilisers.

The stabilizers may be radical quenchers that act by deactivating polymer-bonded carbon radicals by hydrogen transfer, substitution, recombination or addition. Suitable stabilizers that act in this manner include $C_2$-$C_6$ straight or branched chain alkanes; $C_2$-$C_6$ alkane derivatives having at least one hydrogen atom bonded to a secondary or tertiary carbon atom; $C_2$-$C_6$ straight or branched chain alkenes; $C_2$-$C_6$ alkene derivatives having at least one allylic hydrogen atom such as propene, 1-butene, isobutene and isopentene; $C_2$-$C_6$ straight or branched chain alkynes such as acetylene, propyne, butyne and 3-methylbut-1-yne; $Si_1$-$Si_4$ silanes; $Si_1$-$Si_4$ silane derivatives with at least one silicon boned hydrogen atom such as silane, disilane, methylsilane, dimethylsilane, trimethylsilane, etc.; phosphine; phosphine derivatives with at least one phosphorous bonded hydrogen atom such as methylphosphine, dimethylphosphine, etc.; nitric oxide; ammonia and amines with at least one nitrogen bonded hydrogen atom and at least one hydrocarbon group having from 1 to 4, preferably 1 to 2, carbon atoms. Examples of suitable stabilizers that act in this manner include n-propane, 2-methylpropane, 2,2-dimethylpropane, n-butane, 2-methylbutane, propene, 2-methylpropene, 1-butene, 2-butene, 1,3-butadiene, silane, phosphine, nitric oxide, ammonia, triethylamine, trimethylamine, dimethylethylamine, diethylmethylamine, methylamine and dimethylamine.

The stabilizers may be radical quenchers that act by scavenging, decomposing or derivatizing polymer bonded peroxide and alkoxide radicals to produce reactive species and stable functional groups or secondary reaction products. Suitable stabilizers that act in this manner include ammonia; amines having at least one hydrocarbon group having from 1 to 4, preferably 1 to 2, carbon atoms; phosphine and phosphine derivatives. Examples of suitable stabilizers include triethylamine, trimethylamine, dimethylethylamine, diethylmethylamine, methylamine, dimethylamine and phosphine. A further example is a hydrogen transfer agent such as isopropane which reacts with an alkyl radical to produce an isopropyl radical which may lose a second hydrogen atom isopropene.

Triethylamine is a particularly preferred stabilizer.

Chemically stable mixtures comprising any combinations of these stabilizers may also be used.

The fluid comprising at least one stabilizer may be referred to as a "reactive fluid" in that it reacts with the surface-fluorinated plastics material to reduce or eliminate reaction of the material with an oxygen source. The fluid may be in the form of a gas, a vapour or a liquid although gaseous fluids are preferred.

The fluid may consist essentially of at least one stabilizer, e.g. where the or each stabilizer is not supported in an inert carrier fluid. However, the fluid usually comprises at least one stabilizer supported in an inert carrier fluid. In embodiments where the fluid is gaseous, the stabilizer usually has a (total) partial pressure of no more than about 100 kPa, and preferably no more than 10 kPa. In preferred embodiments, the (total) partial pressure of the stabilizer is about 6 kPa. The inert carrier gas may be for example nitrogen, argon or helium.

The surface-fluorinated plastics material or the surface-fluorinated plastics material derived therefrom is usually exposed to said fluid at a temperature of from about 0°C to about the softening temperature of the plastics material, e.g. within the self-sustaining temperature range of the plastics material. In preferred embodiment, the exposure temperature is about room temperature, e.g. about 20 to about 25°C.

The surface-fluorinated plastics material or the surface-fluorinated plastics material derived therefrom is usually exposed to the fluid for less than about 60 minutes. In preferred embodiments, the exposure time is about 40 minutes.

The process may further comprise exposing the surface-fluorinated plastics material to a gas comprising molecular oxygen to produce at least partially oxidized surface-fluorinated plastics material and then exposing said at least partially oxidized surface-fluorinated plastics material to the fluid. The gas comprising molecular oxygen may be molecular oxygen alone or mixed with at least one other gas, e.g. as in air. Molecular oxygen reacts with the polymer bonded carbon radicals formed during the surface fluorination to produce polymer bonded peroxide and/or alkoxide radicals.

The surface-fluorinated plastics material may be exposed to said gas comprising molecular oxygen for up to about 60 minutes, preferably for no more than about 10 minutes, e.g. about 5 minutes.

The process can be used to improve the barrier properties of any plastics material. However, the process has particular application in reducing the permeability of polyolefins, particularly polyethylene, and derivatives thereof. In particular, the process is used to improve the barrier properties of high density polyethylene ("HDPE").

One advantage of preferred embodiments of the present process is that the surface-fluorination step can be achieved using any of the known surface-fluorination techniques including fluorination using either fluorine gas alone or diluted in an inert carrier fluid or using a cold plasma of fluorine ions and radicals diluted in an inert carrier fluid. The inert carrier fluid may be any suitable fluid and is usually a gas such as nitrogen, argon or helium gas.

Fluorination may be carried out using virtually oxygen-free fluorine at a partial pressure of no more than about 4 kPa in an inert carrier gas at about 1 atm. (about 0.1 MPa) The fluorination step may be carried out at about room temperature and for about 1.5 to about 2.5 hours.

In preferred embodiments, the surface-fluorinated plastics material or the surface-fluorinated plastics material derived therefrom is exposed to the fluid after no more than 60 minutes following termination of surface-fluorination. Preferably, no more than 30 minutes elapse after termination of the surface-fluorination step before exposure to the fluid and, more preferably, this period is less than about 10 minutes.

The plastics material may be in any suitable form. For example, if it is in the form of a membrane, then the process may comprise:

surface-fluorinating at least one side of the membrane to produce a plastics membrane having at least one fluorinated surface; and

exposing the or at least one fluorinated surface of the plastics membrane or a fluorinated surface derived therefrom to a fluid comprising at least one stabilizer.

Where the plastics material is in the form of a container, the process may comprise:

surface-fluorinating at least the interior surface of the container to produce a container comprising a fluorinated interior surface; and

exposing at least the fluorinated interior surface of the container or a fluorinated interior surface derived therefrom to a fluid comprising at least one stabilizer.

A preferred embodiment of the first aspect of the present invention is substantially as herein described with reference to the accompanying examples.

According to a second aspect of the present invention, there is provided use of at least one stabilizer to reduce the permeability of a surface-fluorinated plastics material to organic solvent.

According to a third aspect of the present invention, there is provided use of at least one stabilizer to reduce the wettability of a surface fluorinated plastics material to organic solvent.

The organic solvent may be a mixture of at least one hydrophilic component and at least one hydrophobic component. For example, the organic solvent may be hydrocarbon vehicle fuel containing at least one oxygenated component selected from ethers or alcohols such as methanol.

According to a fourth aspect of the present invention, there is provided use of at least one stabilizer to reduce the oxidative degradation of a surface-fluorinated plastics material.

The stabilizer is preferably as defined above.

The following is a description, with reference to the drawings, of examples of presently preferred embodiments within the scope of the present invention. In the drawings:

FIGURE 1 is a schematic representation of a weight loss cell used for permeation testing;
FIGURE 2 is an exploded view of the cell in Figure 1;
FIGURE 3 is a graph depicting absolute weight loss against time at 17.5°C and 23.3°C for fluorinated HDPE material not treated according to the present invention; and
FIGURE 4 is a graph depicting the data of Figure 3 normalised as described below;
FIGURE 5 is a graph depicting the normalised specific weight loss against time in Comparative Example 1;
FIGURE 6 is a graph depicting the normalised specific weight loss against time in Example 1;
FIGURE 7 is a graph depicting the normalised specific weight loss against time in Comparative Example 2; and
FIGURE 8 is a graph depicting the normalised specific weight loss against time in Example 2.

The following experimental tests were performed with polyethylene films of an average 350 $\mu$m thickness. The films were prepared from technical high-density polyethylene (blow moulding grade; densities between 0.945 and 0.950 g/cm$^3$) in a press-fusion process.

After the preparation of the sample films, the films were submitted to treatment with elemental fluorine. The treatment conditions were chosen in such a way that the treatment time and fluorine concentration were those used in typical industrial fluorination processes.

The test samples were fluorinated in a stainless steel vacuum reactor at 20 to 24°C and 36 kPa fluorine partial pressure with no carrier gas. In order to allow for a very low oxygen contaminant level during the fluorine treatment, the fluorine employed in the treatment was purified of oxygen according to the procedure developed by Shamir and Binenboym (Inorg. Chim. Acta 2, 37 (1968)).

All substances used for the post-treatment of the fluorinated polymer samples were carefully degassed and/or purified by distillation and/or solid bed absorption as appropriate.

The permeation tests were carried out with the CEC reference fuel RF-02-99 oxy 0.8-1.2 (Calif. Phase II) supplied by Dow Haltermann Products GmbH (Germany). The base fuel was supplemented by 5 vol. % methanol and stored over molecular sieves (pore diameter 0.3 nm) until needed.

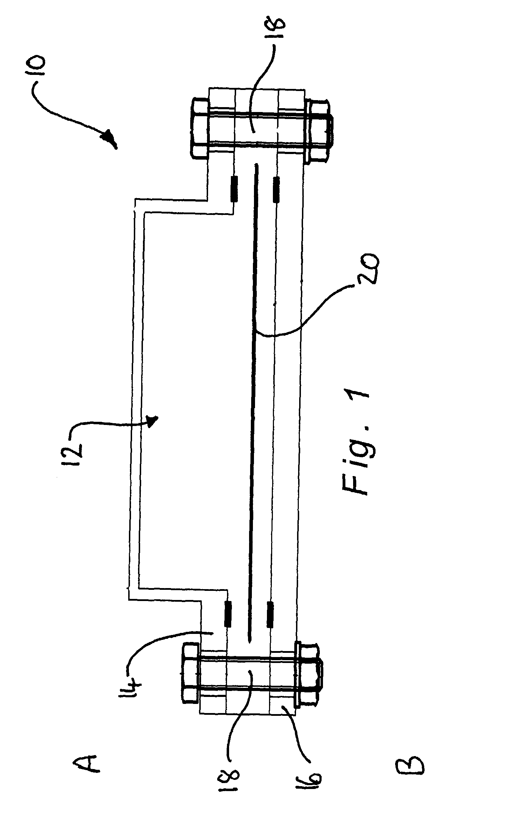

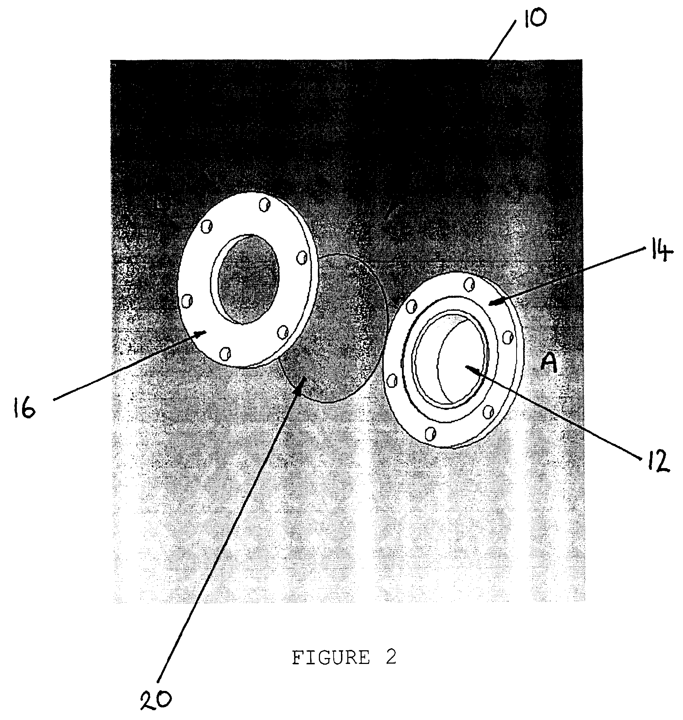

For the permeation tests, purpose-built weight loss cells as depicted in Figures 1 and 2 were used. In the Figures, the weight loss cell 10 has a solvent reservoir 12 incorporating a ring flange 14. A separate ring flange 16 secured to the ring flange 14 of the solvent reservoir 12 by bolts 18. A polymer film 20 is provided between ring flanges 14 and 16.

In the test program, weight loss cells for polymer films with 60 and 40 mm diameter were used.

The weight loss measurements were carried out according to the following procedure (see Figures 1 and 2) :

(a) The weight loss cell 10 was positioned with the bottom of the solvent reservoir 12 (Side A) on an appropriate support pad;
(b) The solvent reservoir 12 was filled with the test solvent;
(c) The polymer film 20 was placed on the flat staunching ring in the seal groove of the cell flange 14;
(d) The loose ring flange 16 was arranged above the screw holes and carefully squeezed against the cell body by tightening of the bolts;
(e) The weight of the permeation cell 10 was determined with an accuracy of 5 mg;
(f) The weight loss cell 10 was turned up side down - with the open ring flange 16 to the bottom (Side B) - and placed on an appropriate horizontal support to ensure complete wetting of the polymer film 20; and

(g) The cell weight was determined at regular time intervals for a time period of typically 25 to 30 days.

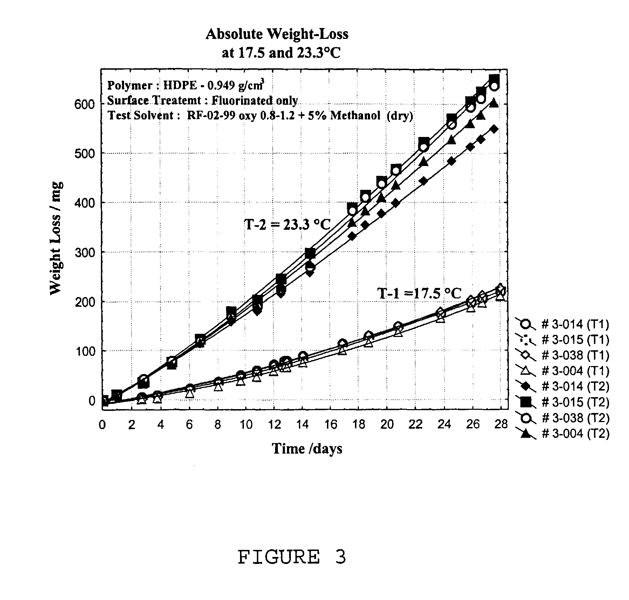

Figure 3 depicts absolute weight loss data from experiments carried out in accordance with the above-mentioned procedure at 17.5°C and 23.3°C on HDPE (0.949 c/cm$^3$) that was fluorinated only.

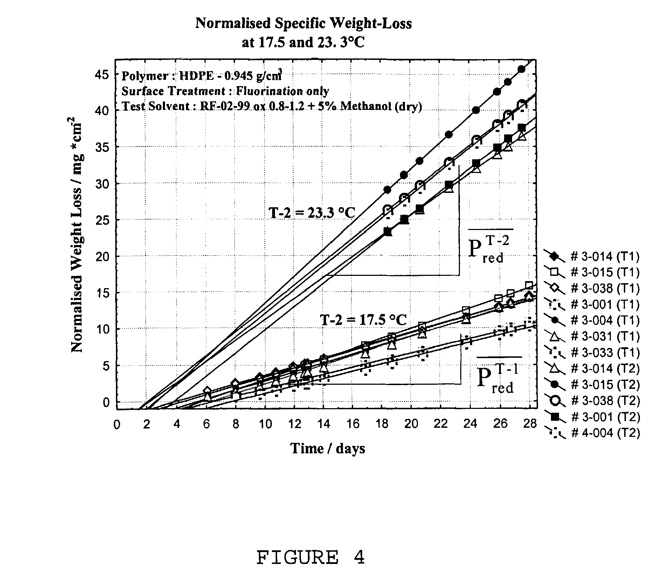

The experimental weight loss data $\Delta m_{exp}$ are normalised according to Formula I (normalised to a standard sample thickness of 350 $\mu$m and 125 minutes treatment time). During the data reduction process, the linear dependency of the growth of the fluorinated layer on the square root of the fluorination time and the reciprocal dependence of weight loss on the thickness of the sample fluorinated under standard conditions was taken into account. The normalised weight loss data expressed in units of weight per unit area of wetted sample surface $F_{wetted}$ was plotted as a function of time (see Figure 4) and this provided the desired weight loss rate ($P_{red}$) - the slope $P_{red}(T)$ of the linear part of the weight loss curve - in units of weight per unit area and time at a given temperature.

$$\Delta m_{red.}^{T}(T) = \frac{1}{F_{wetted}}\left(\Delta m_{exp.}^{T} \cdot \frac{d_{sample}[\mu m]}{350\mu m} \cdot \sqrt{\frac{t_{treatm.}[min]}{125\,min}}\right)$$

Formula I

Figure 4 depicts normalised, specific weight loss for a number of selected permeation experiments performed at 17.5°C and 23.3°C on samples of HDPE (0.945 g/cm$^3$). Samples from the same polymers (e.g. #3-014) were used at the two different temperatures. It is important to note that experimental data were normalised with regard to fluorination time (same thickness of the fluorinated surface layer. Formula I assumes that the temperature and the fluorine partial pressure during the fluorination are always the same. This condition was satisfied in the Inventors experiments. If that is not the case, a more complex formula is required to normalise the raw experimental data) and the total thickness of the fluorinated sample only.

The weight loss measurements as illustrated in Figure 3 which were carried out at different temperatures were also normalised using Formula II to a standard permeation temperature of 20°C to calculate the reduced average permeation rate $P_{red}$ at 20°C.

$$\frac{d\,\ln \overline{P_{red}^{T}}}{d\,T} = \frac{E_{act.}^{(P)}}{R \cdot T^2}$$

T           Temperature;

$P^T$          Average reduced specific permeation rate at temperature T [weight*surface area$^{-1}$*time$^{-1}$]; and

$E^{(P)}_{act}$         Activation energy of the permeation process

Formula II

COMPARATIVE EXAMPLE 1

Three polyethylene films ($\rho_{polymer}$=0.949 g/cm$^3$, diameter (d) = 6 cm (wetted diameter = 4.4 cm); film thickness = 362 $\pm$ 2.1 $\mu$m) were surface fluorinated with virtually oxygen-free fluorine at a temperature of 21 $\pm$ 1°C and 3.6 kPa fluorine partial pressure for 110, 110 and 125 minutes respectively.

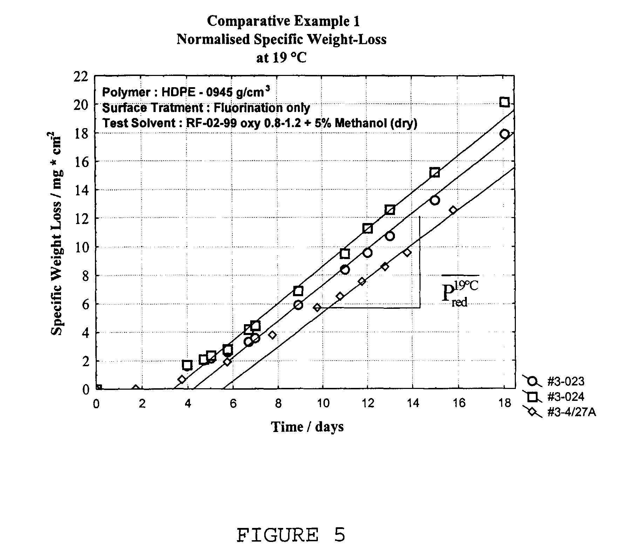

The subsequent weight loss tests were carried out at room temperature with RF-02-99 oxy 0.8-1.2 (Calif. Phase II) reference fuel containing 5 vol. % methanol and the normalised specific weight loss against time is depicted in Figure 5. These tests resulted in a normalised (treatment time = 125 min, film thickness = 350 $\mu$m) permeation rate ($P_{red}$) at 20°C of 1.53 $\pm$ 0.10 mg/(d*cm$^2$).

EXAMPLE 1

Eleven polyethylene films ($\rho_{polymer}$ = from 0.945 to 0.949 g/cm$^3$, diameter = 6 cm (wetted diameter = 4.4cm); film thickness between 327 to 374 $\mu$m) were surface fluorinated with virtually oxygen-free fluorine between 20 and 23°C and 3.6 kPa fluorine partial pressure with fluorination treatment times between 120 and 125 minutes.

After completion of fluorination, the samples were then exposed to air for 5 minutes and then treated at room temperature with undiluted gaseous triethylamine ("TEA") at a partial pressure of 6 kPa for 40 minutes.

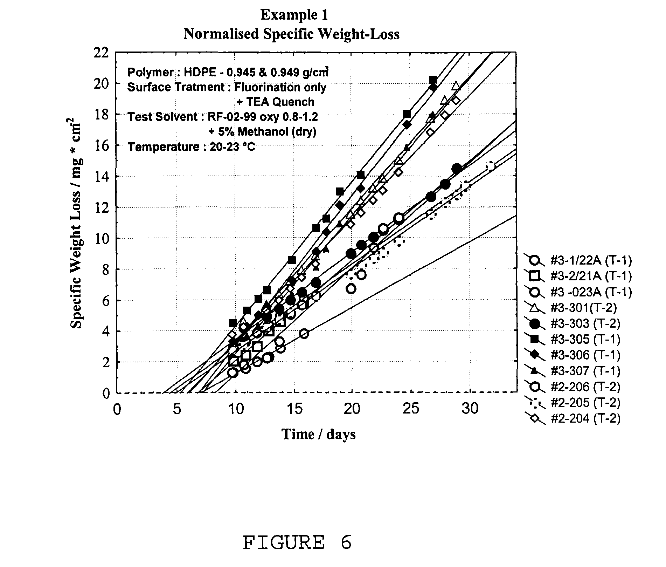

The subsequent weight loss tests were carried out at temperatures between 18 and 20°C with dry RF-02-99 oxy 0.8-1.2 (Calif. Phase II) reference fuel containing 5 vol. % methanol and the normalised specific weight loss against time is depicted in Figure 6. These tests resulted in a normalised (treatment time = 125 min, film thickness = 350 $\mu$m) permeation rate ($P_{red}$) at 20°C of 0.82 $\pm$ 0.16 mg/(d*cm$^2$). Such a permeation rate is less than the rate observed in Comparative Example 1 by a factor of about 1.8.

COMPARATIVE EXAMPLE 2

Twelve polyethylene films ($\rho_{polymer}$=0.949 g/cm$^3$, diameter = 4.4 cm; film thickness between 337 and 374 $\mu$m) were surface fluorinated with virtually oxygen-free fluorine at temperatures between 23.6 and 24°C and 3.6 kPa fluorine partial pressure for 125, 128 and 132 minutes.

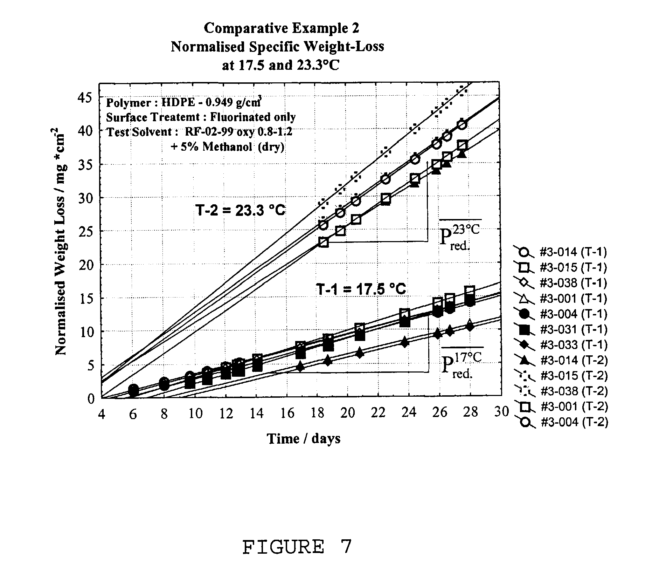

The subsequent weight loss tests were carried out at temperatures between 17.5 and 23.2°C with RF-02-99 oxy 0.8-1.2 (Calif. Phase II) reference fuel containing 5 vol. % methanol and the normalised specific weight loss against time is depicted in Figure 7. These tests resulted in a normalised (treatment time = 125 min, film thickness = 350 $\mu$m) permeation rate ($P_{red}$) at 20°C of 0.93 $\pm$ 0.11 mg/(d*cm$^2$).

EXAMPLE 2

Nine polyethylene films ($\rho_{polymer}$ 0.949 g/cm$^3$, diameter = 4.4 cm; film thickness between 347 and 374 $\mu$m) were surface fluorinated with virtually oxygen-free fluorine at 23°C and 3.6 kPa fluorine partial pressure with a fluorination treatment time of 126 minutes.

After completion of fluorination, the samples were then exposed to air for 5 minutes and then treated at room temperature with gaseous TEA at a partial pressure of 6.0 kPa for 40 minutes.

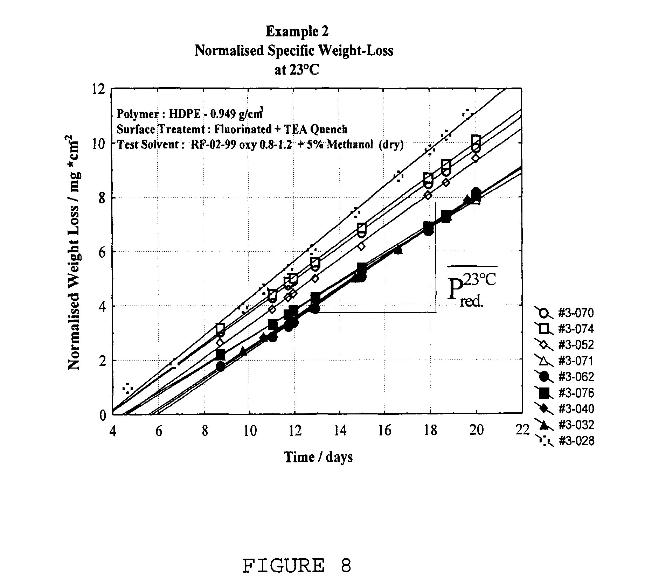

The subsequent weight loss tests were carried out at a temperature of 23°C with dry RF-02-99 oxy 0.8-1.2 (Calif. Phase II) reference fuel containing 5 vol. % methanol and the normalised specific weight loss against time is depicted in Figure 8. These tests resulted in a normalised (treatment time = 125 min, film thickness = 350 $\mu$m) permeation rate ($P_{red}$) at 20°C of 0.354 $\pm$ 0.038 mg/(d*cm$^2$). Such a permeation rate is less than the rate observed in Comparative Example 2 by a factor of about 2.6.

Advantages of preferred embodiments of the present invention include:

- Reduced permeability (e.g. improved barrier performance) of plastics materials to organic solvent, especially hydrocarbon vehicle fuel comprising oxygenated components such as methanol;
- Reduced wettability of surface fluorinated plastics membranes to organic solvent, particularly to hydrophobic organic liquids having hydrophilic components;
- Reduced extent to which fluorinated barrier layer deteriorates due to oxidative degeneration;
- Elimination of a need to monitor and carefully control oxygen contaminant levels - resulting in increased efficiency and a reduction of capital and operating costs; and
- Exposing a surface-fluorinated plastics material or a surface-fluorinated plastics material derived therefrom to a reactive fluid comprising at least one stabilizer can be integrated with existing industrial surface fluorination processes without substantial modification of existing equipment or protocols.

It will be appreciated that the invention is not restricted to the details described above with reference to the preferred embodiments but that numerous modifications and variations can be made without departing from the spirit or scope of the invention as defined by the following claims.

**Claims**

1. A process for reducing the permeability of a plastics material to organic solvent comprising:

surface-fluorinating at least a portion of the surface of a plastics material to produce a surface-fluorinated plastics material; and
exposing said surface-fluorinated plastics material or a surface-fluorinated plastics material derived therefrom to a fluid comprising at least one stabilizer.

2. A process as claimed in Claim 1 wherein the stabiliser quenches radical species located at least on the surface of said surface-fluorinated plastics material or said surface-fluorinated plastics material derived therefrom thereby reducing or eliminating unwanted reactions with said material.

3. A process as claimed in Claim 1 or Claim 2 wherein the stabilizer has a molecular weight of no more than 180.

4. A process as claimed in any of Claims 1 to 3 wherein the stabilizer has a boiling point at about 0.1 MPa (about 1 atm.) of no more than about 150°C.

5. A process as claimed in any of the preceding claims wherein the stabilizer is a liquid at room temperature.

6. A process as claimed in any of the preceding claims wherein the stabilizer deactivates polymer bonded carbon radicals by hydrogen transfer, substitution, recombination or addition.

7. A process as claimed in Claim 6 wherein the stabilizer is selected from the group consisting of $C_2$-$C_6$ straight or branched chain alkanes; $C_2$-$C_6$ alkane derivatives having at least one hydrogen atom bonded to a secondary or tertiary carbon atom; $C_2$-$C_6$ straight or branched chain alkenes; $C_2$-$C_6$ alkene derivatives having at least one allylic hydrogen atom; $C_2$-$C_6$ straight or branched chain alkynes; $Si_1$-$Si_4$ silanes; $Si_1$-$Si_4$ silane derivatives with at least one silicon bonded hydrogen atom; phosphine; phosphine derivatives with at least one phosphorous bonded hydrogen atom; nitric oxide; ammonia and amines with at least one nitrogen bonded hydrogen atom and at least one hydrocarbon group having from 1 to 4 carbon atoms.

8. A process as claimed in Claim 6 or Claim 7 wherein the stabilizer is selected from the group consisting of n-propane, 2-methylpropane, 2,2-dimethylpropane, n-butane, 2-methylbutane, propene, 2-methylpropene, 1-butene, 2-butene, isobutene, 1,3-butadiene, acetylene, propyne, butyne, 3-methylbut-1-yne, silane, methylsilane, dimethylsilane, trimethylsilane, phosphine, methylphosphine, dimethylphosphine, nitric oxide, ammonia, triethylamine, trimethylamine, dimethylethylamine, diethylmethylamine, methylamine and dimethylamine.

9. A process as claimed in any of Claims 1 to 5 wherein the stabilizer scavenges, decomposes or derivatizes polymer bonded peroxide and alkoxide radicals to produce reactive species and stable functional groups or secondary reaction products.

10. A process as claimed in Claim 9 wherein the stabilizer is selected from the group consisting of ammonia, amines having at least one hydrocarbon group having from 1 to 4 carbon atoms, phosphine and phosphine derivatives.

11. A process as claimed in Claim 9 or Claim 10 wherein the stabilizer is selected from the group consisting of triethylamine, trimethylamine, dimethylethylamine, diethylmethylamine, methylamine and dimethylamine.

12. A process as claimed in any of the preceding claims wherein the stabilizer is triethylamine.

13. A process as claimed in any of Claims 7 to 11 wherein the fluid comprises a chemically stable mixture of at least two stabilizers.

14. A process as claimed in any of the preceding claims wherein the fluid consists essentially of at least one stabiliser.

15. A process as claimed in any of Claims 1 to 13 wherein the fluid comprises at least one stabilizer supported in an inert carrier fluid.

16. A process as claimed in any of the preceding claims wherein the fluid is gaseous.

17. A process as claimed in Claim 16 wherein the stabilizer has a (total) partial pressure in a carrier gas of no more than 100 kPa.

18. A process as claimed in any of the preceding claims wherein the fluid is a liquid.

19. A process as claimed in any of the preceding claims wherein the surface-fluorinated plastics material or the surface-fluorinated plastics material derived therefrom is exposed to said fluid at a temperature of from about 0°C to about the softening temperature of the plastics material.

20. A process as claimed in any of the preceding claims wherein the surface-fluorinated plastics material or the surface-fluorinated plastics material derived therefrom is exposed to said fluid for no more than about 60 minutes.

21. A process as claimed in any of the preceding claims further comprising exposing the surface-fluorinated plastics material to a gas comprising molecular oxygen to produce at least partially oxidized surface-fluorinated plastics material and exposing said at least partially oxidized surface-fluorinated plastics material to said fluid.

22. A process as claimed in Claim 21 wherein the surface-fluorinated plastics material is exposed to said gas comprising molecular oxygen for less than about 60 minutes.

23. A process as claimed in any of the preceding claims wherein said surface-fluorinated plastics material or said surface-fluorinated plastics material derived therefrom is exposed to the fluid after no more than 60 minutes following termination of surface-fluorination.

24. A process as claimed in any of the preceding claims wherein said plastics material is in the form of a membrane, said process comprising:

    surface-fluorinating at least one side of the membrane to produce a plastics membrane having at least one fluorinated surface; and
    exposing the or at least one fluorinated surface of the plastics membrane or a fluorinated surface derived therefrom to a fluid comprising at least one stabilizer.

25. A process as claimed in any of the preceding claims wherein said plastics material is in the form of a container, said process comprising:

    surface-fluorinating at least the interior surface of the container to produce a container having a fluorinated interior surface; and
    exposing at least the fluorinated interior surface of the container or a fluorinated interior surface derived therefrom to a fluid comprising at least one stabilizer.

26. Use of at least one stabilizer to reduce the permeability of a surface-fluorinated plastics material to organic solvent.

27. Use of at least one stabilizer to reduce the wettability of a surface fluorinated plastics material to organic solvent.

28. Use as claimed in Claim 26 or Claim 27 wherein the organic solvent is a mixture of at least one hydrophilic component and at least one hydrophobic component.

29. Use as claimed in any of Claims 26 to 28 wherein the organic solvent is hydrocarbon vehicle fuel containing at least one oxygenated component.

30. Use of at least one stabilizer to reduce the oxidative degradation of a surface-fluorinated plastics material.

31. Use as claimed in any of Claims 26 to 30 wherein the stabiliser is as defined in any of Claims 2 to 12.

*Fig. 1*

FIGURE 2

**Absolute Weight-Loss**
**at 17.5 and 23.3°C**

FIGURE 3

Normalised Specific Weight-Loss
at 17.5 and 23. 3°C

FIGURE 4

14

**Comparative Example 1**
**Normalised Specific Weight-Loss**
**at 19 °C**

FIGURE 5

Example 1
Normalised Specific Weight-Loss

FIGURE 6

**Comparative Example 2**
**Normalised Specific Weight-Loss**
**at 17.5 and 23.3°C**

FIGURE 7

**Example 2**
**Normalised Specific Weight-Loss**
**at 23°C**

FIGURE 8

**EP 1 614 709 A1**

European Patent
Office

**EUROPEAN SEARCH REPORT**

Application Number

EP 04 25 3705

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 816 418 A (AIR PROD & CHEM) 7 January 1998 (1998-01-07) | 1-10,14, 16,18, 25-27, 29-31 | C08J7/12 |
| Y | * claims 1-4,13,14 * | 7-9 | |
| X | US 4 595 706 A (MILLIGAN DENNIS J ET AL) 17 June 1986 (1986-06-17)  * claims 1,4,6 * * column 2, line 17 - line 51 * | 1-7,9, 10,14, 18, 25-27, 29-31 | |
| X | US 6 045 766 A (MOSER RAINER) 4 April 2000 (2000-04-04)  * claims 1,4-6 * * column 3, line 38 - line 44 * * examples * | 1-15,18, 25-27, 29-31 | |
| X | US 4 668 743 A (NOVAK LEO R ET AL) 26 May 1987 (1987-05-26)  * claims 1,3 * | 1-16,18, 25-27, 29-31 | TECHNICAL FIELDS SEARCHED (Int.Cl.7)  C08J |
| Y | EP 0 416 400 A (APPLIED MATERIALS INC) 13 March 1991 (1991-03-13) * claims 1,8 * | 7-9 | |
| A | US 4 678 842 A (SANDLER STANLEY R) 7 July 1987 (1987-07-07) * claim 1 * | 1 | |
| A | DE 19 05 094 A (BRITISH RESIN PROD LTD) 22 January 1970 (1970-01-22) * claim 1 * | 1 | |

-/--

The present search report has been drawn up for all claims

| Place of search | Date of completion of the search | Examiner |
|---|---|---|
| The Hague | 20 October 2004 | Hillebrand, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 04 25 3705

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 4 869 859 A (NEUMANN HORST ET AL) 26 September 1989 (1989-09-26) * claim 1 * * example 1 * ----- | 1 | |
| | | | TECHNICAL FIELDS SEARCHED (Int.Cl.7) |

The present search report has been drawn up for all claims

| Place of search | Date of completion of the search | Examiner |
|---|---|---|
| The Hague | 20 October 2004 | Hillebrand, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 04 25 3705

This annex lists the patent family members relating to the patent documents cited in  the above-mentioned European search report.
The members are as contained in the European Patent Office EDP file on
The European Patent Office is in no way liable for these particulars which are merely given for the purpose of information.

20-10-2004

| Patent document cited in search report | | Publication date | Patent family member(s) | | Publication date |
|---|---|---|---|---|---|
| EP 0816418 | A | 07-01-1998 | US | 5770135 A | 23-06-1998 |
| | | | CA | 2208825 A1 | 01-01-1998 |
| | | | DE | 69707065 D1 | 08-11-2001 |
| | | | DE | 69707065 T2 | 21-03-2002 |
| | | | EP | 0816418 A2 | 07-01-1998 |
| | | | ES | 2161399 T3 | 01-12-2001 |
| | | | ZA | 9705814 A | 30-12-1998 |
| US 4595706 | A | 17-06-1986 | NONE | | |
| US 6045766 | A | 04-04-2000 | DE | 19822151 C1 | 05-01-2000 |
| | | | EP | 0959098 A1 | 24-11-1999 |
| US 4668743 | A | 26-05-1987 | US | 4782121 A | 01-11-1988 |
| EP 0416400 | A | 13-03-1991 | US | 5035751 A | 30-07-1991 |
| | | | DE | 69025244 D1 | 21-03-1996 |
| | | | DE | 69025244 T2 | 27-06-1996 |
| | | | DE | 69029075 D1 | 12-12-1996 |
| | | | DE | 69029075 T2 | 22-05-1997 |
| | | | EP | 0416400 A1 | 13-03-1991 |
| | | | EP | 0418592 A1 | 27-03-1991 |
| | | | JP | 3004696 B2 | 31-01-2000 |
| | | | JP | 3120368 A | 22-05-1991 |
| | | | KR | 181728 B1 | 15-04-1999 |
| | | | JP | 3130368 A | 04-06-1991 |
| | | | KR | 184269 B1 | 15-04-1999 |
| | | | US | 5129958 A | 14-07-1992 |
| US 4678842 | A | 07-07-1987 | CA | 1266547 A1 | 06-03-1990 |
| | | | US | 4904739 A | 27-02-1990 |
| DE 1905094 | A | 22-01-1970 | DE | 1905094 A1 | 22-01-1970 |
| | | | AT | 302901 B | 10-11-1972 |
| | | | BE | 727757 A | 31-07-1969 |
| | | | CH | 485570 A | 15-02-1970 |
| | | | DK | 134271 B | 11-10-1976 |
| | | | ES | 363209 A1 | 16-12-1970 |
| | | | FR | 2001245 A5 | 26-09-1969 |
| | | | GB | 1244971 A | 02-09-1971 |
| | | | IL | 31483 A | 29-02-1972 |
| | | | NL | 6901487 A | 05-08-1969 |
| | | | SE | 351410 B | 27-11-1972 |
| | | | US | 3647613 A | 07-03-1972 |
| US 4869859 | A | 26-09-1989 | DE | 3640975 A1 | 15-09-1988 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 04 25 3705

This annex lists the patent family members relating to the patent documents cited in  the above-mentioned European search report.
The members are as contained in the European Patent Office EDP file on
The European Patent Office is in no way liable for these particulars which are merely  given for the purpose of information.

20-10-2004

| Patent document cited in search report | Publication date | Patent family member(s) | | Publication date |
|---|---|---|---|---|
| US 4869859 A | | AT | 66949 T | 15-09-1991 |
| | | EP | 0270776 A2 | 15-06-1988 |
| | | ES | 2026505 T3 | 01-05-1992 |
| | | JP | 1808992 C | 10-12-1993 |
| | | JP | 5018689 B | 12-03-1993 |
| | | JP | 63145012 A | 17-06-1988 |

EPO FORM P0459